**Europäisches Patentamt**

**European Patent Office**

**Office européen des brevets**

(19)

(11) Veröffentlichungsnummer : **0 330 056 B1**

## (12) EUROPÄISCHE PATENTSCHRIFT

(45) Veröffentlichungstag der Patentschrift :
**22.04.92 Patentblatt 92/17**

(51) Int. Cl.$^5$ : **A47B 31/06, E05D 3/06**

(21) Anmeldenummer : **89102535.5**

(22) Anmeldetag : **15.02.89**

(54) Servicewagen.

(30) Priorität : **26.02.88 CH 721/88**

(43) Veröffentlichungstag der Anmeldung :
**30.08.89 Patentblatt 89/35**

(45) Bekanntmachung des Hinweises auf die
Patenterteilung :
**22.04.92 Patentblatt 92/17**

(84) Benannte Vertragsstaaten :
**AT BE DE ES FR GB GR IT LU NL SE**

(56) Entgegenhaltungen :
**EP-A- 0 067 122**
**FR-A- 2 228 353**

(73) Patentinhaber : **ROMAY AG**
**Gontenschwilerstrasse 560**
**CH-5727 Oberkulm (CH)**

(72) Erfinder : **Huber, Thomas**
**Landstrasse 732**
**CH-5727 Oberkulm (CH)**

(74) Vertreter : **Fillinger, Peter, Dr.**
**Rütistrasse 1a**
**CH-5400 Baden (CH)**

**Beschreibung**

Die vorliegende Erfindung bezieht sich auf einen Servicewagen gemäss dem Oberbegriff des Anspruchs 1.

Bei einem Servicewagen dieser Art ist das Türblatt mittels eines Klavierbandes am Korpus angeschlagen. Diese Scharnierverbindung hat den Vorteil, dass in den engen Gängen zwischen den Sitzreihen eines Passagierflugzeugs das Türblatt um 270° herum und flach an die Aussenwand des Korpus geschwenkt werden kann. Ein weiterer Vorteil ist, dass das Türblatt leicht schwenkbar ist und trotz dem dafür erforderlichen Scharnierspiel nicht im Scharnier hängt und sich darin verwindet. Es hat indessen den Nachteil, dass die Schwenkachse, die eine der vier vertikalen Kanten des Korpus bildet und daher leicht verletzlich ist, häufig und mit beachtlichem Arbeitsaufwand ersetzt werden muss.

Die vorliegende Erfindung stellt sich die Aufgabe, einen Servicewagen der erwähnten Art derart zu verbessern, dass unter Wahrung der genannten Vorteile die erwähnten Nachteile entfallen.

Diese Aufgabe wind durch die im kennzeichnenden Teil des Anspruchs 1 angegebenen Merkmale gelöst. Weitere Merkmale der Erfindung sind Gegenstand der abhängigen Ansprüche 2 bis 4.

Anhand der beiliegenden schematischen Zeichnung wird die Erfindung beispielsweise erläutert. Es zeigen:

Fig. 1 einen Servicewagen in perspektivischer Ansicht,

Fig. 2 eine Vorderansicht des Servicewagens bei geöffneter Türe,

Fig. 3 bis 5 einen Schnitt längs der Linie III-III in Fig. 2, wobei das Türblatt in drei verschiedenen Stellungen gezeigt ist und

Fig. 6 einen Teil des Scharniers in perspektivischer Darstellung.

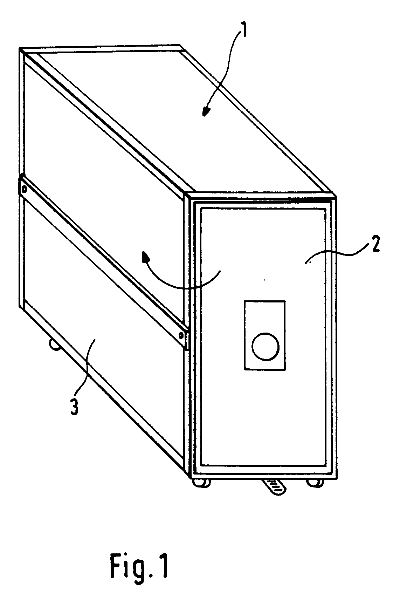

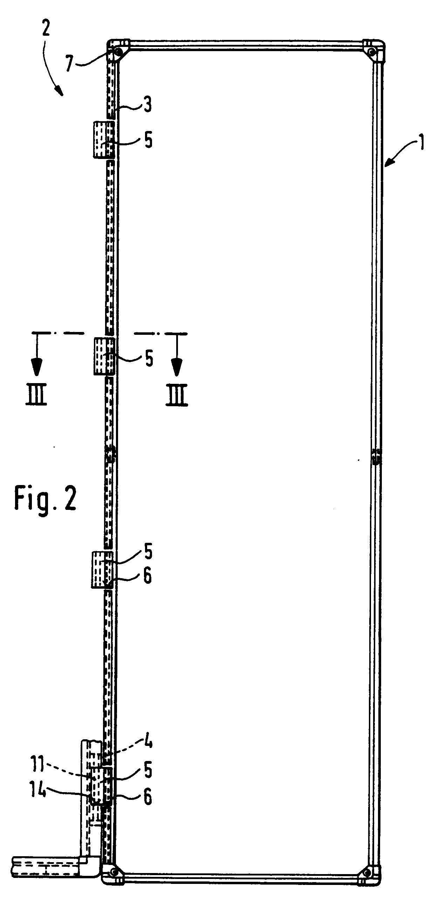

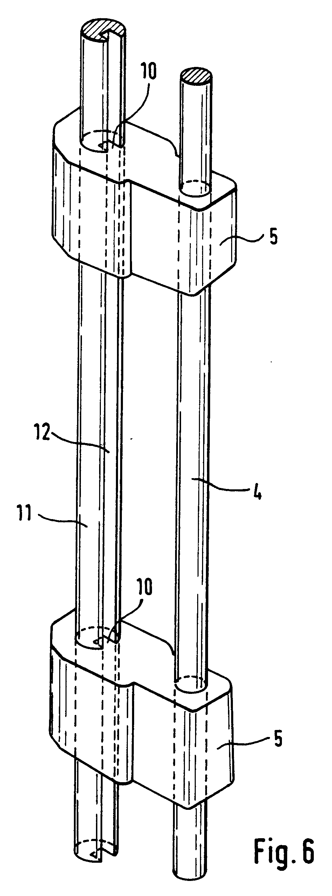

Der Servicewagen nach Fig. 1 weist einen auf feststellbaren Rädern verfahrbaren Korpus 1 auf, der an seiner Frontseite durch sein Türblatt 2 verschlossen ist. Das Türblatt 2 ist links am korpusseitigen Türrahmen angeschlagen und in Richtung des eingezeichneten Pfeiles aufklappbar. Die Scharnierverbindung zwischen dem Korpus 1 einerseits und dem Türblatt 2 anderseits wird nachfolgend mit Bezug auf die Fig. 2 bis 6 beschrieben.

Das vordere Ende des Korpus ist als Türrahmen gestaltet in dessen der Seitenwand 2 folgender Rahmenschenkel in entsprechenden Lagern eine im Querschnitt kreisrunde Schwenkachse 4 gelagert ist, welche sich näherungsweise über die ganze Höhe des Korpus 1 erstreckt und nach einem Entfernen der Schutzkappe 5 von oben senkrecht in die korpusseitigen Lager steckbar ist. Im der Seitenwand 3 folgenden Rahmenschenkel sind in regelmässigem Abstand Ausnehmungen 6 vorhanden, in welchen die entsprechenden Abschnitte der Schwenkachse 4 allseits zugänglich sind. An diesen Abschnitten der Schwenkachse 4 sind Scharnierkörper 5 angelenkt, welche mit einer Bohrung 8 versehen sind durch welche die Schwenkachse 4 ebenfalls hindurch gesteckt ist. Der Scharnierkörper 5 ist somit um die Schwenkachse 4 verschwenkbar, welche ihrerseits um ihre Längsachse schwenkbar in den korpusseitigen Lagern gelagert ist. Mit Abstand zur Bohrung 8 weist jeder Lagerkörper eine zweite parallele Bohrung 9 auf, in die eine mit dem Scharnierkörper einstückig gefertigte Nase 10 ragt. Durch die Bohrungen 9 der Scharnierkörper 5 ist eine zweite Schwenkachse 11 gesteckt, welche mit einer achsparallelen, im Querschnitt der Nase 10 entsprechenden Nut 12 versehen ist. Die Schwenkachse 11 ist dadurch verdrehfest mit Bezug auf die Scharnierkörper 5 in denen sie längsachsial verschiebbar ist. Die zweite Schwenkachse 11 ist zwischen den Scharnierkörpern 5 in entsprechenden, achsial ausgerichteten Bohrungen im Türblatt 13 gelagert, welches im Bereich der Scharnierkörper 5 mit Ausnehmungen 14 versehen und daher um die Schwenkachse 11 bzw. um die Scharnierkörper 5 herum geschwenkt werden kann.

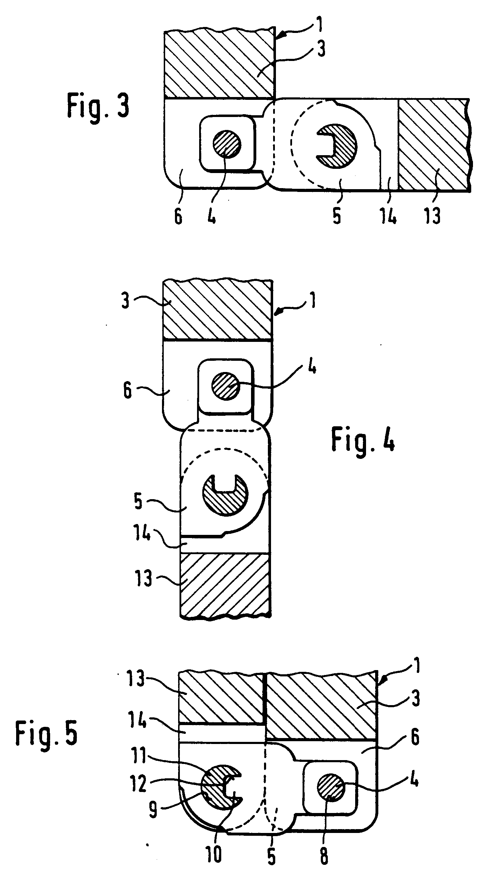

Fig. 3 zeigt den Servicewagen bei geschlossener Türe. In diesem Zustand ist das Scharnier von der äussersten vertikalen Kante des Korpus 1 distanziert und daher gegen Schläge geschützt. Fig. 4 zeigt den Servicewagen mit nach vorne geschwenkter Türe, wobei das Scharnier zwischen Korpus 1 und Türblatt 2 geschützt ist. Ist das Türblatt 2 nach aussen zurückgeklappt und gegen die Seitenwand 3 anliegend, bildet das Türblatt 2 eine gerundete, vertikale und daher weniger schlagempflindliche Kante, gegenüber der die Scharnierkörper 5 zudem zurückversetzt sind.

Dadurch, dass zwischen den Scharnierkörpern 5 und den Schwenkachsen 4, 11 einerseits oder dem Türblatt 13 bzw. dem Korpus 1 anderseits eine verdrehfeste Verbindung besteht, kann das Scharnierspiel so gross gewählt werden, dass das Türblatt leicht verschwenkbar ist ohne aber im Scharnier zu hängen oder sich darin zu verwinden.

Obwohl beim beschriebenen Ausführungsbeispiel die verdrehfeste Verbindung zwischen den Scharnierkörpern 5 einerseits und der Schwenkachse 11 anderseits gezeigt und beschrieben ist, kann die drehfeste Verbindung auch zwischen der Wand 3 und der Schwenkachse 4 oder zwischen der Schwenkachse 4 und dem Scharnierkörper 5 oder zwischen dem Türblatt 3 und der Schwenkachse 11 angebracht sein. Es besteht auch die Möglichkeit, die Schwenkachsen 4 und 11 verdrehfest in der Wand 3 bzw. im Türblatt 3 zu lagern und die Schwenkverbindung zwischen den Scharnierkörpern 5 und den Schwenkachsen 4 und 11 vorzusehen.

## Patentansprüche

1. Servicewagen mit einem quaderförmigen Korpus (1), der front- und/oder rückseitig mit einem mittels einem Scharnier angelenkten Türblatt (2) verschliessbar ist, dadurch gekennzeichnet, dass das Scharnier zwei parallele Schwenkachsen (4, 11) aufweist, von denen die eine in entsprechenden Lagern am Korpus (1) und die andere in entsprechenden Lagern am Türblatt (2) gelagert ist, dass die beiden Schwenkachsen (4, 11) durch die zugeordneten Lager von wenigstens zwei voneinander distanzierten Scharnierkörpern (5) hindurchgeführt sind und dass wenigstens eine der Schwenkachsen (4, 11) mit den Scharnierkörpern (5) einerseits oder dem Türblatt (2) bzw. dem Korpus (1) anderseits verdrehfest verbunden ist.

2. Servicewagen nach Anspruch 1, dadurch gekennzeichnet, dass die drehfeste Verbindung durch die in Querschnittsform der Schwenkachsen (4, 11) einerseits und jene der Lager anderseits bewirkt ist.

3. Servicewagen nach Anspruch 2, dadurch gekennzeichnet, dass eine der beiden Schwenkachsen (4, 11) eine achsparallele Nut (12) aufweist und die drehfeste Verbindung durch eine im Lager des Scharnierkörpers (5) vorstehende Nase (10) gebildet ist.

4. Servicewagen nach Anspruch 3, dadurch gekennzeichnet, dass die mit der Nut (12) versehene Schwenkachse (11) türblattseitig angeordnet ist.

## Claims

1. Service trolley having a right-parallelepipedal body (1) which can be closed at the front and/or rear by a door leaf (2) articulated by means of a hinge, characterised in that the hinge has two parallel swivel spindles (4, 11), one of which is mounted in corresponding bearings on the body (1) and the other of which is mounted in corresponding bearings on the door leaf (2), in that the two swivel spindles (4, 11) are led through the assigned bearings of at least two spaced-apart hinge bodies (5) and in that at least one of the swivel spindles (4, 11) is connected securely against twisting to the hinge bodies (5) on the one hand or to the door leaf (2) or the body (1) on the other hand.

2. Service trolley according to Claim 1, characterised in that the torsionally resistant connection is effected by the cross-sectional shape of the swivel spindles (4, 11) on the one hand and that of the bearings on the other hand.

3. Service trolley according to Claim 2, characterised in that one of the two swivel spindles (4, 11) has an axially parallel groove (12) and the torsionally secure connection is formed by a lug (10) protruding in the bearing of the hinge body (5).

4. Service trolley according to Claim 3, characterised in that the swivel spindle (11) provided with the groove (12) is arranged on the door leaf.

## Revendications

1. Chariot de service formé d'un corps parallélépipédique (1) dont la face avant et/ou la face arrière sont susceptibles d'être fermées par un battant (2) articulé par une charnière, chariot caractérisé en ce que la charnière comporte deux axes de pivotement (4, 11) parallèles, dont l'un est monté dans des paliers correspondants sur le corps (1) et l'autre dans des paliers correspondants du battant (2), les deux axes (4, 11) passant à travers les paliers correspondants d'au moins deux corps de charnière (5) écartés l'un de l'autre, et en ce qu'au moins, d'une part, l'un des axes (4, 11) est solidaire en rotation des corps de charnière (5) ou, d'autre part, du battant (2) ou du corps (1).

2. Chariot de service selon la revendication 1, caractérisé en ce que la liaison solidaire en rotation est réalisée par la forme de la section des axes de pivotement (4, 11), d'une part, et celle des paliers, d'autre part.

3. Chariot de service selon la revendication 2, caractérisé en ce que l'un des deux axes de pivotement (4, 11) comporte une rainure (12) parallèle à l'axe et la liaison solidaire en rotation est formée par un bec (10) en saillie dans le palier du corps de charnière (5).

4. Chariot de service selon la revendication 3, caractérisé en ce que l'axe de pivotement (11) muni de la rainure (12) est prévu du côté du battant.

Fig.1

EP 0 330 056 B1

Fig. 2

5

Fig. 3

Fig. 4

Fig. 5

Fig. 6